Europäisches Patentamt

European Patent Office

Office européen des brevets

(11) Veröffentlichungsnummer: **0 145 871**
A2

## (12) EUROPÄISCHE PATENTANMELDUNG

(21) Anmeldenummer: 84111887.0

(51) Int. Cl.⁴: **B 65 G 63/02**

(22) Anmeldetag: 04.10.84

(30) Priorität: 10.11.83 DE 8332320 U

(71) Anmelder: IEM Fördertechnik GmbH, Industriegebiet, D-8581 Kastl (DE)

(43) Veröffentlichungstag der Anmeldung: 26.06.85 Patentblatt 85/26

(72) Erfinder: Schneider, Reinhold, Dipl.-Ing., Hochstrasse 4, D-8487 Pressath (DE)

(74) Vertreter: Matschkur, Peter Dipl.-Phys. et al, Czowalla - Matschkur Patentanwälte Dr. Kurt-Schumacher-Strasse 23, D-8500 Nürnberg 11 (DE)

(84) Benannte Vertragsstaaten: AT BE CH DE FR GB IT LI LU NL SE

(54) Container-Doppelfahrwagen mit Hubtisch.

(57) Anordnung zum Umsetzen von Containern mittels auf Führungsschienen bewegbaren Doppelfahrwagen, die durch Achsen verbundene Laufradpaare zur Bewegung der Container in Richtung der Verlängerung ihrer Längsachse sowie ein zusätzliches Fahrwerk zum Umsetzen der Container in eine andere Richtung aufweisen, wobei beide Fahrwerke gegeneinander höhenverstellbar angeordnet sind, und wobei der Doppelfahrwagen einen Hubtisch zum Umsetzen der von ihm beförderten Container aufweist.

EP 0 145 871 A2

Container-Doppelfahrwagen mit Hubtisch

Die Erfindung bezieht sich auf eine Anordnung zum Umsetzen von Containern mittels auf Führungsschienen bewegbarer Doppelfahrwagen, die durch Achsen verbundene Laufradpaare zur Bewegung der Container in Richtung der Verlängerung ihrer Längsachse sowie ein zusätzliches Fahrwerk zum Umsetzen der Container in eine andere Richtung aufweisen, wobei beide Fahrwerke gegeneinander höhenverstellbar angeordnet sind.

Container werden zunehmend zum Transport verschiedener Güter verwendet, und um ihren wirtschaftlichen Einsatz zu sichern, müssen sie selbst und ihre Beförderungs- und Handhabungsmittel entsprechend ausgestattet sein, damit ihre Verwendung kostengünstiger als das Umladen dieser Güter auf selbstfahrende Fahrzeuge ist.

Eine wirtschaftliche Art und Weise der Containerumsetzung ist insbesondere dann von Interesse, wenn sie auf verhältnismäßig kurzen Wegen transportiert, in unterschiedlichen Richtungen bewegt und dabei häufig befüllt und wieder entladen werden müssen.

Das mit ihrem Transport auf schienengebundenen Wegen verbundene Problem der Richtungsänderung auf kleinem Raum und mit geringem technischem Aufwand ist in der bei Eisen-

bahnwaggons und Transportloren seit langem üblichen Weise gelöst, indem man den Containertransportwagen mit einem zusätzlichen Fahrwerk ausstattet, also etwa mit zwei weiteren durch Achsen verbundenen Laufradpaaren, die in der Höhe gegeneinander versetzbar angeordnet sind, so daß der Doppelfahrwagen wahlweise auf je zwei Radpaaren in winklig zueinander verlaufenden Richtungen bewegt werden kann, ohne daß Drehscheiben oder Transportwegverlängerungen auf gekrümmten Schienenwegen erforderlich werden.

Neben diesen Fortbewegungsmitteln benötigen Containerumschlagplätze noch besonderer Einrichtungen zum Anheben und Absetzen beladener bzw. zu befüllender und zu entleerender Container. Es ist üblich, zu diesem Zweck Ladegeschirre und mobile Portalkrane zu verwenden, die an den jeweils zu bewegenden Container herangeführt diesen von ober her an eigens dafür vorgesehenen überstehenden Teilen, Eckbeschlägen und dergleichen ergreifen, anheben und wieder absetzen.

Aufgabe der Erfindung ist es, diese aufwendige und relativ viel Raum über den Containern benötigende Art und Weise ihrer Umsetzung durch eine vorteilhaftere, kostengünstigere, raumsparende und einfach zu bedienende Anordnung zu ersetzen.

Gemäß der Erfindung geschieht dies dadurch, daß der Doppelfahrwagen einen Hubtisch zum Umsetzen der von ihm beförderten Container aufweist.

Diese Kombination von fahrbarem Untersatz und Hubeinrichtung ergibt eine mit geringem technischen Aufwand verbundene, nur wenig mehr Raum als das Container-Transportmittel erfordernde Anordnung, die es erspart, besondere Verladevorrichtungen vorzusehen, deren Maße den Container-Abmessungen anzupassen und die Container selbst mit entsprechenden Beschlägen, Stutzen und dergleichen auszubilden, die zum Ergreifen durch übliche Verladeeinrichtungen nötig wären und dabei einige Sorgfalt zur gegenseitigen Ausrichtung beispielsweise von Tragschlaufen gegenüber von diesen zu umfassenden Tragstutzen erforderte.

Ein weiterer Vorzug der erfindungsgemäßen Ausbildung eines Doppelfahrwagens für Container besteht darin, daß bei diesem Anheben mittels Hubtisches, der einen wesentlichen Teil der Containergrundfläche unterstützt, die Verteilung des Füllgutes im Containerinnenraum die Containerbewegung nicht derart beeinflußt, wie etwa eine zu ungewolltem Kippen führende einseitige Befüllung eines Containers, an dem die Transporthilfsmittel an nahe der Behältermitte vorgesehenen Ansätzen angreifen.

Außerdem kann diese erfindungsgemäße Einrichtung zum Anheben und Absetzen von Containern durch Fernsteuerung betätigt werden und benötigt keinen Einsatz von Arbeitskräften unmittelbar an den umzusetzenden Containern, wie sie zum Einhaken von Tragschlaufen und dergleichen nötig war, was die Umschlagszeit verlängerte und stets die Gefahr des Entstehens von Arbeitsunfällen in sich birgt.

- 4 -

Um die Höhenverstellung des in den Doppelfahrwagen integrierten Hubtisches zu bewirken, soll die erfindungsgemäße Container-Umsetzanlage eine hydraulische Einrichtung
oder elektromotorische Einrichtung aufweisen, die je nach
Erfordernis auch zum Drehen des Hubtisches in horizontaler Ebene eingesetzt werden kann.

Dabei kann die hydraulische und/oder elektrische Einrichtung zur vertikalen Verstellung des Hubtisches aus einem
etwa in der Mitte der Unterstützungsfläche des Containers
angreifenden einzelnen, oder aber auch aus mehreren, beispielsweise in den Eckbereichen der Doppelfahrwagen angeordneten Aggregaten bestehen.

Eine besonders vorteilhafte Ausgestaltung der Erfindung
sieht vor, daß die Anlage elektrische Steuerungselemente
für den Bewegungsablauf der Container-Doppelfahrwagen enthält, die mit nach außen ragenden elektrischen Kontaktnehmern für durch Gegenkontakte markierte Positionen ausgestattet sind, die vorzugsweise aus Schleifleitungen bestehen.

Dabei können je nach Art der elektrischen Leitungsführung
die für die Containersteuerung notwendigen Stromabnehmer
an jeweils zwei, oder aber auch an vier Außenseiten der
Doppelfahrwagen vorgesehen sein.

Ferner liegt es im Sinne der Erfindung, daß die Gegenkontakte aus in unterschiedlicher Höhe angeordneten Schleifleitungen bestehen, die vorzugsweise an den seitlichen Begrenzungswänden der mit Führungsschienen ausgestatteten
Containerfahrbahnen angebracht sind und daß diese Begrenzungswände Unterstützungsflächen für abgesetzte Container bilden.

Weitere Einzelheiten, Merkmale und Vorteile der Erfindung ergeben sich aus der nachstehenden Beschreibung eines in den Figuren dargestellten Ausführungsbeispieles der Erfindung.

Dabei zeigt:

Figur 1     die Draufsicht der schematischen Darstellung eines Container-Umlaufes,

Figur 2     den Schnitt nach Linie II-II in Figur 1,

Figur 3     die Draufsicht auf einen erfindungsgemäßen Doppelfahrwagen mit integrierten Hubtisch und

Figur 4     die schematische  Darstellung eines Container-Umlaufes mit mehreren zueinander parallelen Bahnen.

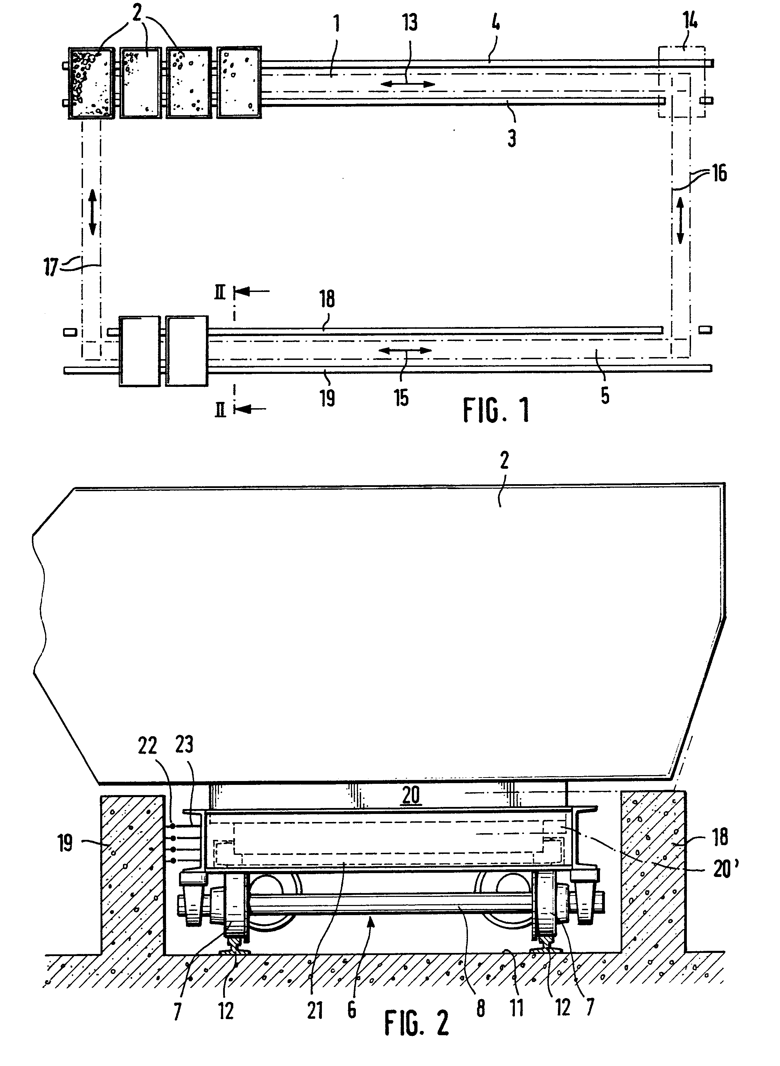

Der Container-Umlauf nach Fig. 1 zeigt eine Führungsbahn 1, über der beispielsweise mit Schüttgut gefüllte Container 2 angeordnet und auf deren Begrenzungswänden 3, 4 abgesetzt sind. Diese Container 2 sollen auf die parallele Führungsbahn 5 umgesetzt werden. Hierzu dient der Doppelfahrwagen 6, der zwei Laufwerke aufweist, und zwar das in Fig. 2 in Arbeitsstellung dargestellte mit den die Räder 7 verbindenden Achsen 8, sowie ein  demgegenüber höhenverstellbares Fahrwerk mit von Achsen 9 getragenen Rädern 10.

- 6 -

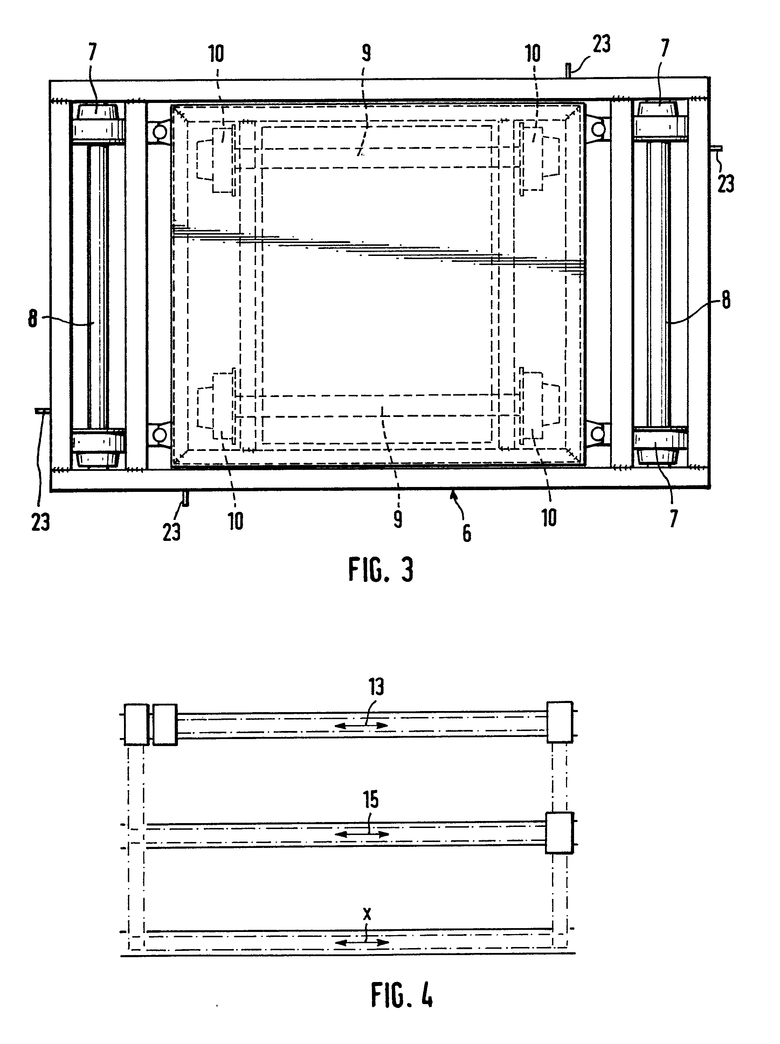

Von diesen beiden Fahrwerken, deren Achsen 8 und 9 wie Figur 3 deutlich erkennen läßt, rechtwinklig zueinander angeordnet sind, befindet sich jeweils nur eines in der abgesenkten Arbeitsstellung, in der die zugehörigen Räderpaare auf ihrer Fahrbahn 11 bzw. darauf angeordneten Führungsschienen 12 aufsitzen. Das heißt, bei dem dargestellten Ausführungsbeispiels ist das die Achsen 9 und Räder 10 enthaltende Fahrwerk, während die gefüllten Container 2 in Richtung des Pfeiles 13 entlang der Führungsbahn 1 bewegt werden, in Arbeitsstellung solange, bis der vom Doppelfahrwagen 6 transportierte Container 2 die strichpunktiert dargestellte Eckposition 14 erreicht hat.

Während der Überleitung der Container 2 von der Führungsbahn 1 zur dazu parallelen Führungsbahn 5 (bzw. umgekehrt), wozu die Überleitungsschienenpaare 16 und 17 vorgesehen sind, befindet sich das andere Fahrwerk mit den durch Achsen 8 verbundenen Rädern 7 in Arbeitsstellung, am nächstfolgenden Eckpunkt tritt wieder das erste Fahrwerk in Aktion, so lange die Container 2, die in der linken unteren Ecke der Figur 2 in ihrer entleerten Endstellung dargestellt sind, in Richtung des Pfeiles 15 auf der Führungsbahn 5 bewegt werden.

Um das Abheben der Container 2 von den Begrenzungswänden der Führungsbahn 1 auf die Doppelfahrwagen 6 und am Ende ihres Transportweges deren Absetzen auf die Begrenzungswände 18, 19 der Führungsbahn 5 zu bewerkstelligen, ist der Doppelfahrwagen 6 mit einem Hubtisch ausgestattet, dessen Arbeitsposition in Figur 2 mit 20 und dessen Ruhestellung in der gleichen Figur mit 20' bezeichnet ist.

Zur Bewegung dieses Hubtisches ist innerhalb des Doppelfahrwagens 6 eine hydraulische oder elektromotorische Einrichtung 21 vorgesehen, die aus einem einzelnen, zentral angeordneten Aggregat oder auch aus mehreren, beispielsweise in den Eckbereichen des Doppelfahrwagen 6 angeordneten Aggregaten bestehen kann.

Diese hydraulische oder elektromotorische Einrichtung 21 ist in erster Linie zur Vertikalverstellung des Hubtisches 20 bestimmt, kann jedoch bei Bedarf, soweit entsprechende nicht dargestellte Getriebe zur Bewegungsumsetzung am Doppelfahrwagen 6 vorgesehen sind, auch zum Schwenken des Hubtisches 20 in horizontaler Ebene Verwendung finden.

Die Bewegung der Container 2 längs ihrer Führungsbahnen 1 und 5 und auf den Überleitungsschienenpaaren 16 und 17, sowie die Vertikal- und gegebenenfalls Drehbewegung des Hubtisches 20, sowie die Höhenverstellung der beiden Fahrwerke des Doppelfahrwagens 6 werden durch elektrischen Antrieb bewirkt.

Wie die schematische Darstellung in Fig. 4 zeigt, ist das Prinzip der Erfindung nicht auf das Umsetzen von Containern zwischen zwei zueinander parallelen Führungsbahnen beschränkt, sondern ebenso vorteilhaft auf Anordnungen mit mehreren Führungsbahnen anwendbar.

Ferner kann der für einen Hubwagen beschriebene Bewegungsablauf in gleicher Weise mit mehreren Hubwagen in einer Umsetzanlage ausgeführt werden.

- 8 -

Zur elektrischen Steuerung dieser Bewegungsabläufe und zur korrekten Positionierung der Container 2 sind in der Anlage Steuerleitungskreise vorgesehen, die im dargestellten Ausführungsbeispiel der Erfindung aus Schleifleitungen 22 bestehen, die an den Begrenzungs- und Absetzwänden 3, 4, 18, 19 befestigt sind, wobei die Erfindung nicht auf die Figur 2 dargestellte Anordnung von vier Schleifleitungen übereinander an nur einer Begrenzungswand 19 beschränkt ist, sondern auch eine davon abweichende Anzahl von Steuerleitungen und gegebenenfalls an beiden den Doppelfahrwagen zugekehrten Außenseiten der seitlichen Begrenzungswände 3, 4, 18, 19 vorgesehen sein kann.

Diese Schleifleitungen 22 bilden den Gegenkontakt zu den an den Doppelfahrwagen angebrachten Kontaktnehmern 23, die je nach Bedarf an zwei oder auch an vier Außenseiten dieser Fahrwagen 6 angeordnet sein können.

Die den gewünschten Arbeits- und Ruhestellungen entsprechende Anordnung von Stromabnehmern 23 und Gegenkontakten 22 gibt die Möglichkeit der exakten Positionierung der Container 2.

Schließlich liegt es auch noch im Sinne der Erfindung, die Anordnung der elektrischen Kontakt- und Steuerelemente dahingehend abzuwandeln, daß die Führungsschienen 12 eine der Stromleitungen bilden.

0145871

- 1 -

Patentansprüche

1. Anordnung zum Umsetzen von Containern mittels auf Führungsschienen bewegbaren Doppelfahrwagen, die durch Achsen verbundene Laufradpaare zur Bewegung der Container in Richtung der Verlängerung ihrer Längsachse sowie ein zusätzliches Fahrwerk zum Umsetzen der Container in eine andere Richtung aufweisen, wobei beide Fahrwerke gegeneinander höhenverstellbar angeordnet sind, dadurch gekennzeichnet, daß der Doppelfahrwagen 6 einen Hubtisch 20 zum Umsetzen der von ihm beförderten Container 2 aufweist.

2. Anordnung nach Anspruch 1, dadurch gekennzeichnet, daß die Anlage eine elektromotorische und/oder hydraulische Einrichtung 21 zur Höhenverstellung und/oder Drehung des Hubtisches aufweist.

3. Anordnung nach Anspruch 1 oder 2, dadurch gekennzeichnet, daß die Einrichtung 21 zur vertikalen Verstellung des Hubtisches 20 aus mehreren, vorzugsweise in den Eckbereichen des Doppelfahrwagens 6 angeordneten Aggregaten besteht.

4. Anordnung nach einem der Ansprüche 1 bis 3, dadurch gekennzeichnet, daß die Anlage elektrische Steuerungselemente für den elektrisch angetriebenen Bewegungsablauf der Doppelfahrwagen 6 enthält, die mit nach außen ragenden elektrischen Kontaktnehmern 23 für durch Gegenkontakte 22 markierte Positionen in der Container-Umsetzanlage ausgestattet sind.

5. Anordnung nach einem der Ansprüche 1 bis 4, <u>dadurch gekennzeichnet,</u> daß die Kontaktnehmer 23 für die Containersteuerung an wenigstens zwei Außenseiten der Doppelfahrwagen 6 angeordnet sind.

6. Anordnung nach einem der Ansprüche 1 bis 5, <u>dadurch gekennzeichnet,</u> daß die Gegenkontakte 22 aus in unterschiedlicher Höhe angeordneten Schleifleitungen bestehen, die vorzugsweise an die Fahrbahn 11 der Containerwagen 6 begrenzenden Seitenwände 3, 4, 18, 19 angebracht sind.

7. Anordnung nach einem der Ansprüche 1 bis 6, <u>dadurch gekennzeichnet,</u> daß die den Steuerleitungskreis tragenden Begrenzungswände 3, 4, 18, 19 der mit Führungsschienen 12 ausgestatteten Containerfahrbahnen 11 Unterstützungsflächen für abgesetzte Container 2 bilden.

0145871

FIG. 1

FIG. 2

0145871

FIG. 3

FIG. 4